# EUROPÄISCHE PATENTSCHRIFT

(11) **EP 2 225 088 B1**
(45) Veröffentlichungstag und Bekanntmachung des Hinweises auf die Patenterteilung: **14.09.2011**
(21) Anmeldenummer: 08860925.0
(22) Anmeldetag: 16.12.2008
(51) Int. Cl.: B29C 61/06

(54) **ARTIKEL AUS EINEM FORMGEDÄCHTNIS-KOMPOSITMATERIAL, VERFAHREN ZU SEINER HERSTELLUNG SOWIE VERFAHREN ZUM ABRUFEN GESPEICHERTER FORMEN**
ARTICLE MADE OF A SHAPE-MEMORY COMPOSITE MATERIAL, METHOD FOR THE PRODUCTION THEREOF, AND METHOD FOR RETRIEVING STORED SHAPES
ARTICLE CONSTITUÉ D'UN MATÉRIAU COMPOSITE À MÉMOIRE DE FORME, PROCÉDÉ POUR SA FABRICATION ET PROCÉDÉ DE RAPPEL DE FORMES CONSERVÉES EN MÉMOIRE

(30) Priorität: 17.12.2007 DE 102007061342
(43) Veröffentlichungstag der Anmeldung: 08.09.2010
(73) Patentinhaber: Helmholtz-Zentrum Geesthacht Zentrum für Material- und Küstenforschung GmbH, 21502 Geesthacht (DE)
(72) Erfinder: KRATZ, Karl, 14615 Berlin (DE); LENDLEIN, Andreas, 14167 Berlin (DE); MOHR, Reinhard, 13187 Berlin (DE); BEHL, Marc, 12207 Berlin (DE)
(74) Vertreter: Gulde Hengelhaupt Ziebig & Schneider
(86) Internationale Anmeldenummer: PCT/EP2008/067582
(87) Internationale Veröffentlichungsnummer: WO 2009/077515

(56) Entgegenhaltungen:
- EP-A- 1 859 819
- EP-A1- 1 634 692
- WO-A-02/45536
- WO-A-99/42528
- WO-A-03/009779
- DE-A1- 3 826 428
- DE-A1- 3 826 429
- US-A1- 2003 033 007
- US-A1- 2005 212 630

## Beschreibung

Die Erfindung betrifft einen Artikel aus einem Formgedächtnis-Kompositmaterial, das ein Formgedächtnispolymer sowie ein, in dieses eingebettetes magnetisches Material umfasst, wobei das Formgedächtnispolymer nach einer thermo-mechanischen Programmierung in der Lage ist, temperaturinduziert von einer temporären Form in seine permanente Form überzugehen. Die Erfindung betrifft ferner ein thermo-mechanisches Verfahren zur Herstellung des programmierten Artikels sowie ein Verfahren zum Abrufen seiner gespeicherten Formen eines so programmierten Artikels.

Im Stand der Technik sind so genannte Formgedächtnispolymere oder SMPs (shape memory polymers) bekannt, die bei Induktion durch einen geeigneten Stimulus einen Formübergang von einer temporären Form in eine permanente Form entsprechend einer vorherigen Programmierung zeigen. Am häufigsten ist dieser Formgedächtniseffekt thermisch stimuliert, das heißt, bei Erwärmung des Polymermaterials über die definierte Schalttemperatur findet die durch Entropieelastizität angetriebene Rückstellung statt. Formgedächtnispolymere sind in der Regel Polymernetzwerke, bei denen chemische (kovalente) oder physikalische (nicht kovalente) Vernetzungsstellen die permanente Form bestimmen. Die Programmierung erfolgt, indem oberhalb der Übergangstemperatur einer von einem Schaltsegment gebildeten Phase (=Schaltphase) das Polymermaterial deformiert und anschließend unter Aufrechterhaltung der Deformationskräfte unter diese Temperatur abgekühlt wird, um die temporäre Form zu fixieren. Erneute Erwärmung oberhalb der Schalttemperatur führt zu einem Phasenübergang und Wiederherstellung der ursprünglichen permanenten Form. (Da die Schalttemperatur T_{sw} im Gegensatz zur Übergangstemperatur Tₜᵣₐₙₛ von der mechanischen Bewegung abhängt, welche die makroskopische Formveränderung definiert, können beide Temperaturen geringfügig voneinander abweichen.)

Neben diesen Zweiformenkunststoffen ("dual-shape polymers"), die neben ihrer permanenten Form eine temporäre Form einnehmen können, sind inzwischen auch AB-Polymernetzwerke (so genannte Dreiformenkunststoffe oder "triple-shape polymers") beschrieben worden, die zwei aus verschiedenen Schaltsegmenten gebildete Phasen mit unterschiedlichen Übergangs- bzw. Schalttemperaturen aufweisen und dadurch in der Lage sind, neben ihrer permanenten Form zwei temporäre Formen in ihrem "Formgedächtnis" zu speichern (z.B. Bellin et al., Proc. Nat. Acad. Sci. USA, 2006 103(48): 18043-18047 oder WO 99/42528 A). Diese Dreiformenkunststoffe weisen grundsätzlich mindestens zwei nicht-mischbare, segregierte Phasen auf, so dass jede Phase für die Fixierung jeweils einer temporären Form genutzt werden kann. Dabei wird die permanente Form durch kovalente Vernetzungsstellen des Polymernetzwerkes festgelegt, während die beiden temporären Formen durch einen thermomechanischen Programmierprozess definiert werden. Die Fähigkeit, temperaturinduziert zwei aufeinander folgende Formenübergänge zu vollziehen, nämlich von einer ersten temporären Form in eine zweite temporäre Form und von dort in die permanente Form, ermöglicht komplexe Bewegungen und eröffnet vielfältige Anwendungsmöglichkeiten, beispielsweise in der Medizin.

Weiterhin ist die magnetisch stimulierte Auslösung eines Formenüberganges bekannt. Dabei kommen Formgedächtnis-Kompositmaterialien zum Einsatz, die eine Matrix eines Formgedächtnispolymers sowie in dieses eingebettete magnetische Partikel umfassen. Bei dem Formgedächtnispolymer handelt es sich um ein thermisch stimulierbares SMP mit der Fähigkeit, nach einer thermo-mechanischen Programmierung temperaturinduziert einen Formenübergang zu vollziehen. Unter Einwirkung eines magnetisches Wechselfeldes kommt es zu einem induktiven Aufheizen der magnetischen Partikel und somit des umgebenden SMP, so dass dieses seine Schalttemperatur erreicht und der Übergang von der zuvor programmierten temporären Form in die permanente Form ausgelöst wird.

Beispielsweise beschreiben Mohr et al. (Proc. Nat. Acad. Sci. USA, 2006, 103(10): 3540-3545) entsprechende Kompositmaterialien aus Formgedächtnispolymeren mit eingebetteten magnetischen Nanopartikeln. Dabei wird der Zusammenhang zwischen dem Oberflächen-Volumen-Verhältnis (O/V) und der bei einem gegebenen Magnetfeld maximal erreichbaren Materialtemperatur Tₘₐₓ beschrieben, insbesondere die Erkenntnis, dass die maximal erreichbare Temperatur Tₘₐₓ mit wachsendem O/V abnimmt.

In WO 2005/042142 A2 werden Formgedächtnis-Kompositmaterialien beschrieben, die eine Formgedächtnispolymermatrix sowie darin eingebettete magnetische und/oder metallische Kolloide umfassen. Ausgelöst durch ein äußeres Magnetfeld erfolgt eine induktive Erwärmung der Kolloidpartikel und somit des umgebenden Polymermaterials, welches eine physikalische Strukturveränderung, insbesondere einen Relaxationsprozess induziert, der zu einer Veränderung der geometrischen Form und letztlich zu einer Freisetzung eines pharmakologischen Wirkstoffes führt. Auch aus US 2005/0212630 A1 ist ein Formgedächtnis-Komposit bekannt, das eine Formgedächtnispolymermatrix sowie darin eingebettete magnetische Partikel umfasst . Auch dieses System ist somit in der Lage, magnetisch induzierte Formenübergänge zu vollführen.

Weitere Artikel aus Formgedächtnismaterialien sind in den Anmeldeschriften EP 1 859 819 A2, DE 38 26 429 A1, DE 38 26 428 A1 und WO 02/45536 A2 offenbart.

Die somit eröffnete Möglichkeit der Steuerung des thermisch induzierten Formgedächtniseffektes durch alternierende Magnetfelder ist insbesondere für medizinische Anwendungen interessant, wo die herkömmliche externe Wärmezufuhr physiologisch oft unverträglich ist. Allerdings erfordern zahlreiche Anwendungen komplexe Formänderung, insbesondere auch solche, welche die sequentielle Abfolge von mehreren Formen umfassen. Dies ist derzeit nicht nach dem Prinzip der magnetischen Stimulation möglich.

Der vorliegenden Erfindung liegt daher die Aufgabe zugrunde, einen Gegenstand mit magnetisch stimulierbarem Formgedächtniseffekt bereitzustellen, der mehr als einen magnetisch induzierten Formenübergang vollziehen kann. Der Gegenstand sollte ferner möglichst einfach und aus einem einheitlichen Material herstellbar sein.

Diese Aufgabe wird durch einen Artikel mit den Merkmalen des Anspruchs 1 gelöst. Der erfindungsgemäße Artikel ist aus einem Formgedächtnis-Kompositmaterial hergestellt, welches ein Formgedächtnispolymer sowie zumindest ein in dieses eingebettetes magnetisches Material umfasst. Bei dem Formgedächtnispolymer handelt es sich um ein "herkömmliches" SMP mit thermisch stimulierbarem Formgedächtniseffekt, das heißt es ist in der Lage, temperaturindiziert zumindest einen Formenübergang von einer thermo-mechanisch programmierten temporären Form in eine permanente Form zu vollziehen. Hingegen kommt es bei dem magnetischen Material allein auf seine Fähigkeit an, in einem magnetischen Wechselfeld so zu wechselwirken, dass es zu seiner Erwärmung kommt. Das magnetische Material ist somit über ein alternierendes Magnetfeld induktiv aufheizbar, so dass eine Erwärmung des Polymermaterials über seine Schalttemperatur erfolgen kann, wodurch die Formrückstellung induziert wird. Der Artikel zeichnet sich dadurch aus, dass er zumindest zwei, unmittelbar oder mittelbar miteinander verbundener Abschnitte aufweist, die sich durch ein unterschiedliches Oberflächen-Volumen-Verhältnis ON unterscheiden.

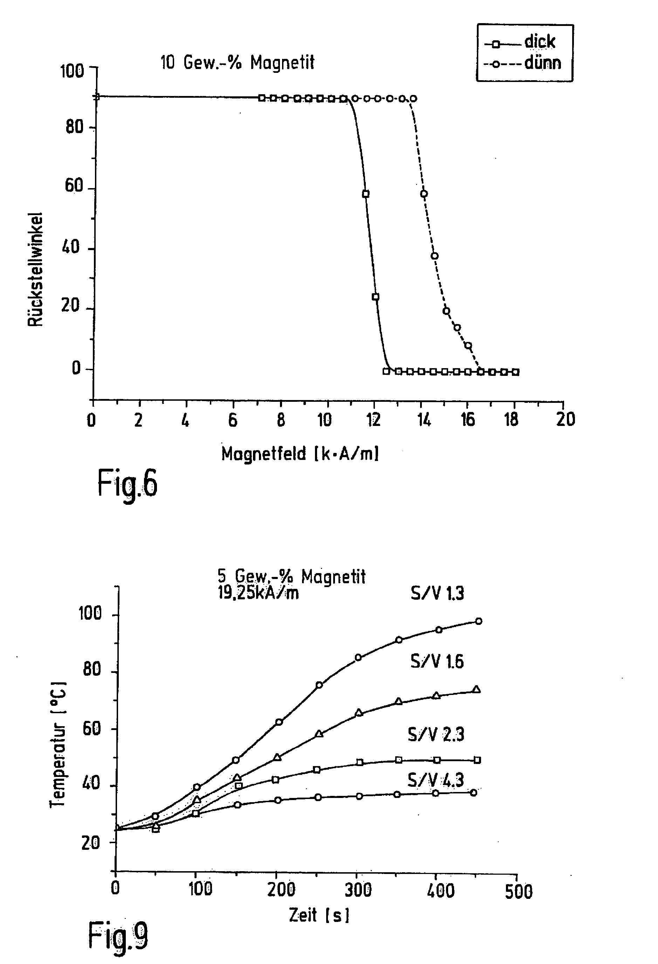

Die Erfindung, die insbesondere in der besonderen geometrischen Gestaltung des Artikels zu sehen ist, macht sich den Umstand zunutze, dass geometrische Körper aus einem Formgedächtnis-Kompositmaterial mit unterschiedlichem ON in einem gegebenen magnetischen Wechselfeld unterschiedliche Materialtemperaturen erreichen (Figur 9). Insbesondere ist die maximal erreichbare Materialtemperatur eines geometrischen Körpers umso geringer, je größer seine Oberfläche im Verhältnis zum Volumen ist. Dies ist auf den verhältnismäßig größeren Wärmeübergang an die Umgebung gegenüber einem Körper mit kleinerem O/V zurückzuführen. Durch das erfindungsgemäße Vorhandensein mehrerer Teilabschnitte innerhalb des Artikels mit unterschiedlichem ON gelingt es, die Wärmetransportprozesse im Bauteil unter Zusammenwirkung mit der Umgebung so zu nutzen, dass derjenige Abschnitt mit dem kleinsten ON in einem geeigneten magnetischen Wechselfeld die zur Formrückstellung (Schaltung) erforderliche Materialtemperatur erreicht und ein Abschnitt mit größerem ON nicht. Erst nach weiterer Erhöhung der Magnetfeldstärke und/oder der -frequenz erreicht auch der Teilabschnitt mit dem größeren ON die zur Formrückstellung erforderliche Materialtemperatur und vollzieht den zuvor programmierten Formübergang. So lassen sich ohne Erhöhung der Umgebungstemperatur mehrere Formen nacheinander abrufen, indem das äußere Magnetfeld sukzessive verstärkt wird, wobei die Formenübergänge der einzelnen Teilabschnitte getrennt voneinander zeitversetzt geschaltet werden. Im Gegensatz zur Formänderung durch Erhöhung der Umgebungstemperatur ist es erfindungsgemäß möglich, örtlich getrennte Teilabschnitte des Artikels isoliert voneinander zu schalten, wobei zunächst derjenige Abschnitt mit dem kleinsten ON geschaltet wird und nachfolgend die anderen Abschnitte in der Reihenfolge ihrer ON. Die Anzahl programmierbarer temporärer Formen wird somit letztlich allein durch die Anzahl der Abschnitte mit unterschiedlichem Oberflächen-Volumen-Verhältnis bestimmt.

Ein Vorteil der Erfindung ist darin zu sehen, dass der Artikel einstückig aus einem einheitlichen Kompositmaterial hergestellt werden kann, das heißt alle Abschnitte mit unterschiedlichem ON bestehen aus dem gleichen Material. Gegenüber der denkbaren Alternative, eine Reihe sukzessiver Formenübergänge durch unterschiedliche Materialien der Teilabschnitte zu realisieren, beispielsweise durch unterschiedliche Konzentration des magnetischen Materials oder durch unterschiedliche Formgedächtnispolymere mit unterschiedlichen Schalttemperaturen, ist der erfindungsgemäße einstückige und Artikel einheitlichen Materials einfach herstellbar, etwa im Spritzgussverfahren oder dergleichen.

Dabei wird im Rahmen der vorliegenden Erfindung unter dem Begriff Abschnitt (oder Teilabschnitt) ein visuell unterscheidbarer Teilbereich des Artikels verstanden, dessen Grenzen nicht willkürlich verlaufen, sondern durch geometrische Gegebenheiten im Körper definiert sind. Insbesondere zeichnen sich die Abschnitte dadurch aus, dass ein Übergang von einem ON eines Abschnitts zu einem ON eines anderen Abschnitts an ihrer Grenzfläche sprunghaft oder zumindest aber in Bezug zu einer Gesamtausdehnung des Artikels steil verläuft. Dabei wird unter "steil" ein Übergang zwischen zwei angrenzenden Oberflächen-Volumen-Verhältnissen verstanden, der sich über eine Länge von maximal 10 % der Gesamtausdehnung des Artikels erstreckt.

Nach einer bevorzugten Ausgestaltung der Erfindung weisen die zumindest zwei Abschnitte des Artikels jeweils eine, in zumindest eine Raumrichtung konstante Materialstärke auf. So können bei einer flächigen Gestaltung des Artikels unterschiedliche Oberflächen-Volumen-Verhältnisse allein durch unterschiedliche Materialstärken der Abschnitte realisiert werden. Alternativ oder zusätzlich zu dieser Maßnahme ist von Vorteil, wenn die zumindest zwei Abschnitte jeweils ein, bezüglich zumindest einer Raumrichtung, insbesondere einer Längserstreckung der Abschnitte, konstantes ON aufweisen. Durch das Vorliegen eines konstanten Oberflächen-Volumen-Verhältnisses innerhalb eines Abschnittes wird erreicht, dass bei Aussetzung des Artikels einem bestimmten Magnetfeld eine örtlich gleichmäßige Wärmeabfuhr in die Umgebung und damit eine homogene Materialtemperatur innerhalb des Abschnittes erzielt wird. Somit wird, wenn diese Materialtemperatur die Schalttemperatur des Formgedächtnispolymers überschreitet, eine kooperativ verlaufende Formrückstellung im gesamten Abschnitt bewirkt.

Es ist bevorzugt vorgesehen, dass die Oberflächen-Volumen-Verhältnisse der unterschiedlichen Abschnitte des Artikels sich durch einen Faktor von mindestens 1,2, insbesondere von mindestens 1,5, unterscheiden. Noch vorteilhafter ist ein Unterschied durch einen Faktor von mindestens 2. Auf diese Weise werden ausreichend große Unterschiede der notwendigen Magnetfeldstärken und/oder -frequenzen sichergestellt, die zur Schaltung der jeweiligen Abschnitte erforderlich sind. Aus dem gleichen Grund ist bevorzugt vorgesehen, dass die zumindest zwei Abschnitte so gewählt sind, dass ihre Oberflächen-Volumen-Verhältnisse eine Differenz einer in einem gegebenen Magnetfeld maximal erreichbaren Materialtemperatur von mindestens 15 K, noch vorteilhafter von mindestens 20 K, aufweisen.

Eine weitere vorteilhafte Ausführung der Erfindung sieht vor, dass die Abschnitte des Artikels nicht unmittelbar miteinander verbunden sind, sondern mittelbar durch einen zwischengeschalteten thermisch isolierenden Abschnitt. Dieser kann beispielsweise durch ein möglichst großes Oberflächen-Volumen-Verhältnis und damit verbunden eine große Wärmeabführrate in die Umgebung gekennzeichnet sein, wobei das ON des thermischisolierenden Abschnittes mindestens dem ON desjenigen Abschnitts mit dem größeren ON der beiden entspricht, insbesondere um mindestens 10 %, vorzugsweise mindestens 20 %, größer ist als dieser.

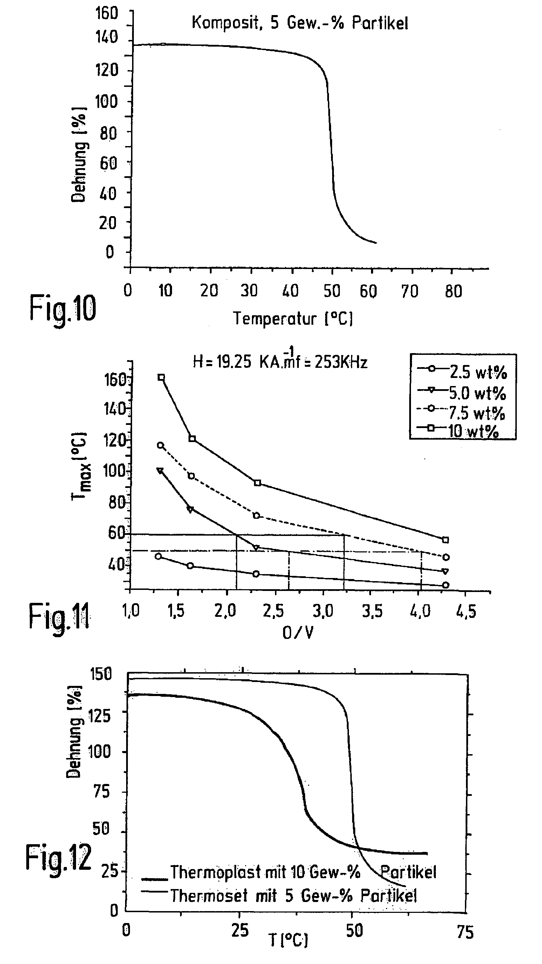

Der Zusammenhang des thermisch induzierten Formgedächtnis-Übergangs und des Oberflächen-Volumen-Verhältnisses ON ergibt sich gemäß Figuren 10 und 11, in welchen einerseits die Dehnung gegen die Temperatur aufgetragen ist (Figur 10) und andererseits die Abhängigkeit der maximal in einem gegebenen Magnetfeld erreichbaren Temperatur Tₘₐₓ vom ON für Kompositmaterialien mit Nanopartikelgehalten von 1,5; 5,0; 7,5 und 10 Gew.-% gezeigt ist (Figur 11). Mittels unterschiedlicher O/V lassen sich demnach unterschiedliche Materialtemperaturen und somit ein Auslösen des Formgedächtnis-Effektes erzielen. Ferner wird die Vorteilhaftigkeit einer möglichst starken Steigung der Kennlinie im Tₘₐₓ₋gegen-O/V-Diagram ersichtlich, da somit bei einem gegebenem Temperaturintervall der Unterschied des ON möglichst gering ist (s. Hilfslinien in Figur 11), bzw. damit bei einem gegeben ON das einstellbare Temperaturintervall möglichst groß ist. Eine Kennlinie mit größerer Steigung kann entweder durch einen Wechsel des Partikelmaterials oder durch Erhöhen des Gehalts an Nanopartikeln erzielt werden (Figur 11).

Es ist zudem von Vorteil, wenn die Rückstellung des Formgedächtniseffektes sich möglichst sprunghaft und in einem relativ geringem Temperaturintervall vollzieht, so dass der notwendige Unterschied des Oberflächen-Volumen-Verhältnisses für ein separates Ansteuern verschiedener Bauteilabschnitte möglichst gering ist. In Figur 12 ist die Änderung der Dehnung in Abhängigkeit der Temperatur für ein Komposit aus einem Thermoplasten mit 10 Gew.-% Partikeln und für ein Polymer-Netzwerk mit 5 Gew.-% Partikeln gezeigt. Die Rückstellung beim Netzwerk erfolgt wesentlich sprunghafter. Für ein separates Ansteuern einzelner Abschnitte eines Bauteils werden daher geringere Unterschiede im ON des Bauteils benötigt.

Ein weiterer Aspekt der Erfindung betrifft ein Verfahren zur Herstellung eines programmierten Artikels, das die Schritte umfasst:
a) Bereitstellen eines Artikels entsprechend der vorstehend beschriebenen Erfindung in seiner permanenten Form,
b) Deformation eines ersten Abschnitts des Artikels bei einer Materialtemperatur oberhalb der Schalttemperatur des Formgedächtnis-Kompositmaterials und anschließender Abkühlung unterhalb der Schalttemperatur und
c) Deformation eines zweiten Abschnitts des Artikels bei einer Materialtemperatur oberhalb der Schalttemperatur des Formgedächtnis-Kompositmaterials und anschließender Abkühlung unterhalb der Schalttemperatur.

Dabei können die Schritte b) und c) in beliebiger Reihenfolge nacheinander oder auch gleichzeitig durchgeführt werden. Die dazu erforderliche Materialtemperatur kann thermisch oder durch Wechselwirkung mit einem alternierenden magnetischen Wechselfeld erreicht werden. Bei sequentieller Durchführung ist von Vorteil, zunächst den Teilabschnitt mit dem größeren ON zu deformieren und nachfolgend abzukühlen und anschließend diesen Schritt mit dem Abschnitt mit dem kleineren O/V, um nicht die Programmierung des zuerst behandelten Abschnitts wiederaufzuheben. Eine beliebige Reihenfolge der Programmierungsschritte (b) und (c) ist möglich, wenn ein separates Aufheizen der Abschnitte mit unterschiedlichen O/V erfolgen kann, welches eine bereits erfolgte Programmierung nicht aufhebt.

Alternativ zu der dargestellten Verfahrensweise kann die gleichzeitige oder sequentielle Deformation der einzelnen Abschnitte auch unterhalb der Schalttemperatur durch "kaltes Verstrecken" erfolgen, wobei der Artikel einer Deformation unterhalb der Übergangstemperatur unterzogen wird. Die Wahl des Abschnittes, der durch kaltes Verstrecken programmiert werden kann, ist frei wählbar. So können beide Abschnitte und somit beide temporäre Formen des Artikels (TP1 und TP2) mittels kaltem Verstrecken programmiert werden. Alternativ kann auch ein Abschnitt des Artikels gemäß (a) bzw. (b) thermo-mechanisch programmiert werden (TP1) und der andere Abschnitt durch kaltes Verstrecken (TP2). Sofern gewährleistet ist, dass die Programmierung einer durch kaltes Verstrecken programmierten temporären Form (TP1) durch partielles Aufheizen nicht aufgehoben wird, kann auch erst aufgeheizt werden und dann die Programmierung gemäß (a) bzw. (b) erfolgen.

In weiterer Abwandlung des Programmierverfahrens kann bei Materialien, deren Schaltübergang auf einem Glasübergang beruht, unterhalb der Schalttemperatur, beispielsweise bei Raumtemperatur, ein geeigneter Weichmacher in das Polymermaterial eingebracht werden (z.B. durch Eintauchen in dem Weichmacher oder eine Lösung von diesem), so dass die Schalttemperatur unterhalb der Umgebungstemperatur sinkt und die Abschnitte gleichzeitig oder nacheinander bei Umgebungstemperatur deformiert werden. Anschließend wird der Weichmacher wieder aus dem Material entfernt, beispielsweise durch Extraktion mit einem geeigneten Lösungsmittel oder durch Anlegen eines Vakuums, wodurch die programmierten temporären Formen fixiert werden. Auch hier ist wieder eine Kombination verschiedener Programmierungsverfahren für die verschiedenen Abschnitte des Artikels möglich, etwa indem ein Abschnitt in den Weichmacher eingetaucht und programmiert wird und ein anderer Abschnitt isoliert aufgeheizt wird. Wiederum ist auch hier darauf zu achten, dass eine Programmierung eines Abschnittes die Programmierung eines anderen Abschnittes nicht aufhebt.

Ein weiterer Aspekt der Erfindung betrifft ein Verfahren zum Abrufen von gespeicherten Formen eines nach einem der vorstehend beschriebenen Verfahren programmierten Artikels mit den Schritten:
(a) Aussetzen des Artikels einem ersten magnetischen Wechselfeld, das geeignet ist, einen ersten Abschnitt des Artikels mit einem ersten Oberflächen-Volumen-Verhältnis (O/V₁) auf eine Temperatur oberhalb der Schalttemperatur des Formgedächtnis-Kompositmaterials zu erwärmen, wobei der erste Abschnitt einen Formenübergang vollzieht und der Artikel von einer ersten temporären Form in eine zweite temporäre Form übergeht, und
(b) Aussetzen des Artikels einem zweiten magnetischen Wechselfeld, das geeignet ist, einen zweiten Abschnitt des Artikels mit einem zweiten Oberflächen-Volumen-Verhältnis (O/V₂), das größer als das erste Oberflächen-Volumen-Verhältnis (O/V₁) des ersten Abschnitts ist, auf oberhalb der Schalttemperatur des Formgedächtnis-Kompositmaterials zu erwärmen, wobei der Abschnitt einen Formenübergang vollzieht und der Artikel von der zweiten temporären Form in die permanente Form übergeht.

Dabei kann der Übergang von dem ersten magnetischen Wechselfeld zu dem zweiten magnetischen Wechselfeld durch schrittweise oder kontinuierliche Erhöhung der Magnetfeldstärke und/oder -frequenz erfolgen.

In alternativer Ausführung kann das Magnetfeld nach Schritt (a) auch unterbrochen (abgeschaltet) werden. Die so erhaltene temporäre Form bleibt dann so lange stabil, bis ein zweites magnetisches Wechselfeld analog Schritt (b) angewendet wird.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigten:
- Figur 1: ein Beispiel eines erfindungsgemäßen Artikels gemäß einer ersten vorteilhaften Ausgestaltung;
- Figur 2: ein Beispiel eines erfindungsgemäßen Artikels gemäß einer zweiten vorteilhaften Ausgestaltung;
- Figur 3: Änderungen der (a) thermischen und der (b) mechanisch-physikalischen Eigenschaften eines SMP-Komposit-Netzwerkes mit 5 Gew.-% magnetischen Nanopartikeln in Abhängigkeit von der Temperatur;
- Figur 4: experimentell ermittelte Beziehung der maximal in einem Magnetwechselfeld erreichbaren Materialtemperatur Tₘₐₓ eines Probenkörpers in Abhängigkeit seines Oberflächen-Volumen-Verhältnisses;
- Figur 5 A-D: Stufen des Programmierungsprozesses eines Artikels nach Figur 2 und des Abrufens der magnetisch stimulierten Formenübergänge;
- Figur 6: Rückstellwinkel von zwei Probenabschnitten mit unterschiedlichem ON eines Artikels gemäß Figur 2 in Abhängigkeit der Magnetfeldstärke;
- Figur 7: experimenteller Aufbau zur Untersuchung des magnetisch stimulierten Formengedächtniseffektes an zwei Probenkörpern mit unterschiedlichem O/V;
- Figur 8: Rückstellergebnisse der Probenkörper gemäß Figur 7 als Funktion der Magnetfeldstärke;
- Figur 9: zeitlicher Verlauf der Materialtemperatur bei einer magnetischen Feldstärke von 19,25 kA/m für ein Kompositmaterial mit 5 Gew.-% magnetischen Partikeln mit unterschiedlichen ON (1,3; 1,6; 2,3 und 4,3) ;
- Figur 10: Abhängigkeit der Dehnung von der Materialtemperatur eines Kompositmaterials mit 5 Gew.-% magnetischen Partikeln;
- Figur 11: Abhängigkeit der maximal erreichbaren Materialtemperatur Tₘₐₓ vom ON für ein Kompositmaterial mit unterschiedlichen Gehalten an magnetischen Partikeln in einem Magnetfeld von 19,25 kA/m; und
- Figur 12: Änderung der Dehnung in Abhängigkeit von Materialtemperatur eines Komposits aus einem thermoplastischen Formgedächtnispolymer mit 10 Gew.-% magnetischen Partikeln und aus einem Polymernetzwerk mit 10 Gew.-% magnetischen Partikeln.

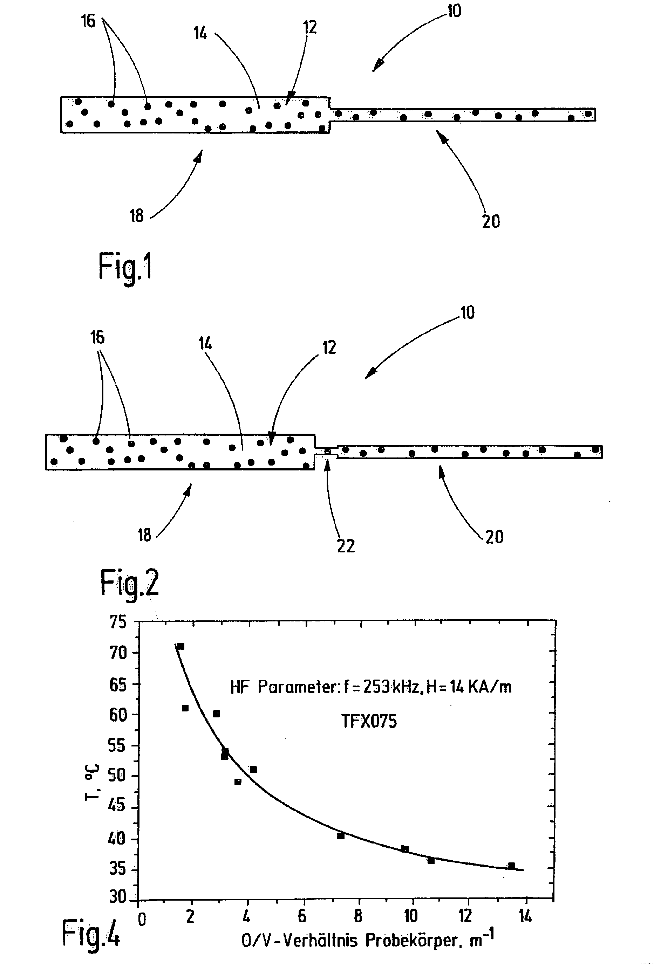

Figur 1 zeigt in einer beispielhaften Ausführung einen erfindungsgemäßen Artikel, der - nach geeigneter Programmierung - zwei magnetisch-induzierte Formenübergänge vollziehen kann. Der insgesamt mit 10 bezeichnete Artikel besteht aus einem vorzugsweise einstückig hergestellten Formgedächtnis-Kompositmaterial 12, welches ein Formgedächtnispolymer 14 sowie ein, in dieses eingebettetes magnetisches Material 16 umfasst.

Bei dem Formgedächtnispolymer 14 handelt es sich um ein Polymernetzwerk mit thermisch induzierbarem Formgedächtniseffekt (SMP). Die Netzwerkbildung kann dabei durch kovalente Bindungen realisiert sein oder durch physikalische Wechselwirkungen, beispielsweise elektrostatische Effekte. Neben den Vernetzungspunkten umfasst das Polymernetzwerk zumindest eine Sorte eines Schaltsegments, das eine materialabhängige Übergangstemperatur, etwa eine Kristallisationstemperatur oder Glasübergangstemperatur, aufweist. Polymernetzwerke, die einen Formgedächtniseffekt aufweisen, sind in der Literatur zahlreich beschrieben. Grundsätzlich ist die vorliegende Erfindung auf kein spezielles Material beschränkt. Beispielsweise kann das Polymernetzwerk ein Schaltsegment aufweisen, das ausgewählt ist aus der Gruppe der Polyester, insbesondere Poly(ε-caprolacton); Polyether, Polyurethane, Polyetherurethan, Polyamide, Polyimide, Polyetherimide, Polyacrylate, Polymethacrylate, Polyvinyle, Polystyrole, Polyoxymethylene, Poly(para-dioxanon) oder andere. Denkbar ist ebenfalls, dass das Polymernetzwerk zwei oder mehr unterschiedliche Schaltsegmente aus der vorstehenden Gruppe oder andere aufweist. Dabei wird das zumindest eine Schaltsegment vorzugsweise so gewählt, dass seine Schalttemperatur in einem für die jeweilige Anwendung akzeptablen Bereich liegt.

Optional kann das Formgedächtnispolymer hydrolytisch spaltbare Gruppen aufweisen, insbesondere Ester-, Amid-, Anhydrid-, Carbonat-, Ether-, Orthoestergruppen oder Kombinationen von diesen. Auf diese Weise werden bioabbaubare Materialien erhalten, was insbesondere für Anwendungen im biomedizinischen Bereich vorteilhaft sein kann. Auch bioabbaubare Formgedächtnispolymere sind aus der Literatur hinlänglich bekannt. Die vorliegende Erfindung ist auf keine speziellen Vertreter dieser Gruppe eingeschränkt.

Hinsichtlich des magnetischen Materials 16 ist bevorzugt vorgesehen, dass dieses in Form von Partikeln vorliegt, insbesondere in Form von Mikropartikeln oder Nanopartikeln. Dabei sind vorliegend Mikropartikel durch einen mittleren Partikeldurchmesser im Bereich von 1 bis 999 µm definiert und Nanopartikel durch einen mittleren Partikeldurchmesser im Bereich von 1 bis 999 nm. Diese Definition schließt somit eine pulverförmige Konsistenz des magnetischen Materials 16 ein. Aus stofflicher Hinsicht kommen für das magnetische Material 16 alle Materialien infrage, die geeignet sind, in einem alternierenden magnetischen Feld eine Wechselwirkung zu zeigen, die zur Erwärmung der Partikel führt. Insbesondere kann das magnetische Material Metalle umfassen, beispielweise Ni, Fe und/oder Co. Geeignet sind darüber hinaus Legierungen, insbesondere Ni-Si, Fe-Pt, Ni-Pd und/oder Co-Pd. Weiterhin können Metalloxide als magnetisches Material 16 verwendet werden, insbesondere Ni-Zn-Fe-O, Ba-Co-Fe-O und/oder Fe-O. Daneben können Magnetite oder Eisenoxide zum Einsatz kommen, in denen die Eisenatome zumindest teilweise durch Co, Ni, Mn, Zn, Mg, Cu, Cr, Cd und/oder Ga ersetzt sind. Geeignet sind ebenfalls Ferrite, insbesondere Ni-Zn-Ferrite und/oder Sr-Ferrite. Ebenso sind Mischungen der vorgenannten Materialien möglich. Bevorzugt werden solche Materialien eingesetzt, die sich in der Polymermatrix homogen verteilen, das heißt mit dieser eine möglichst homogene Mischung ergeben. Insbesondere, wenn dieses Verhalten nicht gegeben ist, kann vorgesehen sein, dass die Partikel des magnetischen Materials 16 eine Beschichtung eines die Mischbarkeit mit dem Formgedächtnispolymer verbessernden Materials aufweisen. Als Beschichtungsmaterial kommen vor allem organische Polymere infrage.

Erfindungsgemäß weist der Artikel 10 zumindest zwei Abschnitte auf, im dargestellten Beispiel einen Abschnitt 18 mit relativ geringem O/V und einen Abschnitt 20 mit einem relativ großen O/V. Dies wird bei einer insgesamt zylindrischen Geometrie durch unterschiedliche Durchmesser der beiden Abschnitte 18 und 20 erreicht oder im Falle einer flächigen Geometrie durch unterschiedliche Materialstärken. Der in Figur 1 dargestellte Artikel 10 weist einen sprungförmigen Übergang zwischen den beiden Oberflächen-Volumen-Verhältnissen der Abschnitte 18 und 20 auf, der gleichzeitig die visuell wahrnehmbare Grenzfläche zwischen den beiden Abschnitten 18 und 20 definiert. Alternativ hierzu kann auch ein gradueller Verlauf zwischen zwei Oberflächen-Volumen-Verhältnissen vorgesehen sein, wobei jedoch dieser so steil gewählt wird, dass die Länge des Übergangsbereichs höchstens 10 % der Gesamtlänge des Artikels 10 beträgt. Denkbar ist zudem, dass der Artikel 10 mehr als zwei Abschnitte mit unterschiedlichen O/V aufweist, wodurch mehr als zwei Formenübergänge programmiert und ausgelöst werden können.

Nach einer bevorzugten Ausführung des erfindungsgemäßen Artikels 10 ist dieser so gestaltet, dass die Wärmeleitung zwischen zwei benachbarten Abschnitten reduziert oder sogar weitgehend unterbunden wird. Ein entsprechendes Beispiel für eine solche Ausführung ist in Figur 2 dargestellt. Hierin sind die gleichen Elemente mit identischen Bezugszeichen wie in Figur 1 bezeichnet. In dem dargestellten Beispiel ist die Wärmeleitung dadurch unterbunden, dass die beiden Abschnitte 18 und 20 nicht unmittelbar miteinander verbunden sind, sondern nur mittelbar über einen zwischengeschalteten isolierenden Abschnitt 22. Dieser ist vorzugsweise aus dem gleichen Kompositmaterial 12 wie der übrige Artikel 10 hergestellt, so dass eine einteilige Herstellungsweise möglich ist. Um die Wärmeleitung zu unterdrücken, weist der isolierende Abschnitt 22 einerseits geringe Kontaktflächen mit den benachbarten Abschnitten 18 und 20 auf und besitzt zudem ein möglichst großes Oberflächen-Volumen-Verhältnis. Insbesondere entspricht das ON des isolierenden Abschnitts 22 mindestens demjenigen des Abschnitts mit dem größeren ON oder übersteigt diesen bevorzugt. Dies ist im dargestellten Beispiel der Abschnitt 20, wobei das ON des isolierenden Abschnitts 22 aufgrund seiner geringeren Materialstärke größer als dieser ist.

Nach einer alternativen, nicht dargestellten Möglichkeit zur Unterdrückung der Wärmeleitung zwischen den Abschnitten 18, 20 wird ein isolierender Abschnitt aus einem Material sehr geringer Wärmeleitfähigkeit zwischen den Abschnitten 18, 20 angeordnet. Da diese Option jedoch mit einem deutlich höheren Herstellungsaufwand verbunden ist, ist die erste Ausführungsform gemäß Figur 2 bevorzugt.

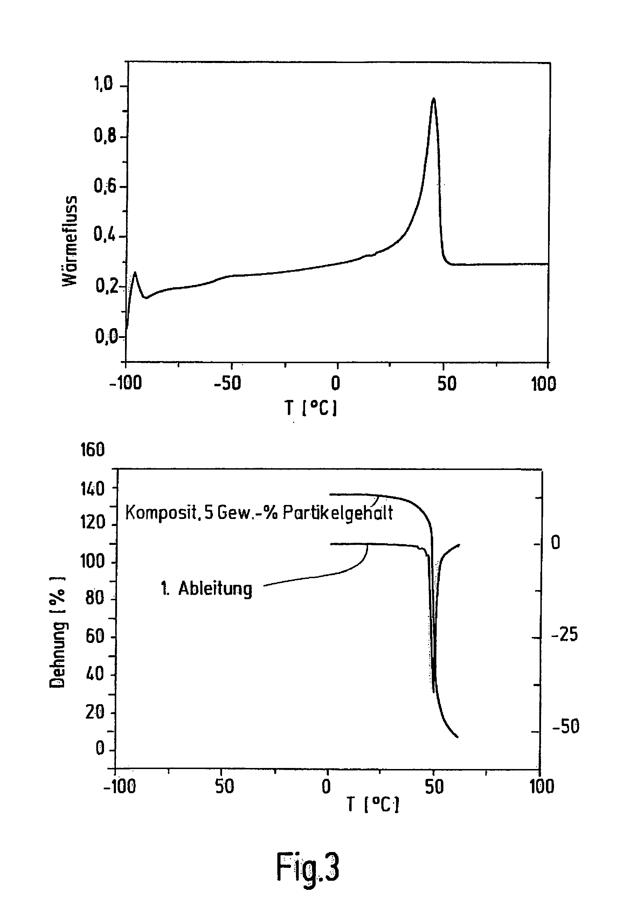

Um den gewünschten multiplen Formeneffekt zu erzielen, müssen die Formgedächtniseigenschaften der Polymermatrix 14 mit den thermischen Eigenschaften des Komposits 12 als Ganzes kombiniert werden. Seitens des Formgedächtnispolymers 14 ist es von Vorteil, dass dieses einen möglichst engen Schaltbereich aufweist, das heißt eine große Änderung des mechanischen Verhaltens (Rückstellung) innerhalb eines relativ kleinen Temperaturintervalls zeigt. Dies ist beispielhaft für ein Polymernetzwerk aus Poly(ε-caprolacton)dimethacrylat in Figur 3 dargestellt, wo im unteren Diagramm die prozentuale Änderung der Dehnung ε sowie die erste Ableitung hiervon gegen die Temperatur dargestellt ist. Im oberen Bereich ist ein Differenzkalometriediagramm (DSC) abgebildet. Dieses zeigt den Schmelzpunkt des semikristallinen Poly(ε-caprolacton)s bei ca. 52 °C. Für Systeme, welche die hier beschriebene O/V-Abhängigkeit bei der magnetischen Aktuation aufweisen, ist jedoch auch ein Glasübergang T_{g} denkbar. Wichtig ist, dass die Systeme eine möglichst sprunghafte Änderung in ihrem mechanischen Verhalten aufweisen, entsprechend einem hohen Wert der ersten Ableitung der Dehnung. Ein enger Schmelz- oder Glasübergangsbereich ist ein Indiz für solche Systeme, jedoch nicht zwingend erforderlich. Die thermischen Eigenschaften des Komposits 12 werden unter anderem von der Art des verwendeten magnetischen Materials 16 bestimmt. Dabei werden die thermischen Eigenschaften des Komposits 12 vorzugsweise so gewählt, dass dieses eine möglichst große Änderung der maximal erreichbaren Materialtemperatur Tₘₐₓ in Abhängigkeit des Oberflächenvolumenverhältnisses aufweist. Neben der Wärmeleitfähigkeit des Formgedächtnis-Kompositmaterials 12, des Aufheizgrades des magnetischen Materials 16 in einem magnetischen Wechselfeld ist dabei der Wärmeübergang an das umgebende Medium entscheidend.

Die Abhängigkeit der maximal in einem Magnetfeld erreichbaren Materialtemperatur Tₘₐₓ eines Probenkörpers von seinem Oberflächen-Volumen-Verhältnis wurde an einem Materialbeispiel untersucht. Es wurden Materialproben aus einem Formgedächtnis-Kompositmaterial hergestellt, welches aus einem TPU-Polyether (Tecoflex^{®} EG 72 von Noveon Inc.) als Formgedächtnispolymer sowie Eisen(II)oxid-Nanopartikel in einer SiO₂-Matrix (AdNano^{®} MagSilica 50, Degussa AG) als magnetisches Material bestand. Die Probenkörper wiesen Zylindergeometrien auf und unterschieden sich in ihrem Durchmesser und der Höhe und somit ihren Oberflächen-Volumen-Verhältnissen. Die Probenkörper wurden einem Magnetfeld mit einer Feldstärke von 14 kA/m und einer Frequenz von 253 kHz in unbewegter Luft ausgesetzt und nach Einstellung der Gleichgewichtsbedingungen wurde die Probenkörpertemperatur gemessen. Das Ergebnis ist in Figur 4 dargestellt, in der die maximal erreichte Materialtemperatur Tₘₐₓ gegen das O/V aufgetragen ist. Erwartungsgemäß zeigt sich, dass Tₘₐₓ mit wachsendem Verhältnis der Oberfläche zum Volumen sinkt. Beispielsweise weist ein Probenkörper mit einem O/V von 3 eine maximale Temperatur von etwa 60 °C auf und mit einem O/V von 13,5 nur 35 °C. Es wurde zudem untersucht, ob eine Abhängigkeit der erreichbaren Materialtemperatur Tₘₐₓ von der eingesetzten Probenkörpermasse besteht. Dabei zeigte sich in dem untersuchten Massenbereich von 45 bis 320 mg keine Abhängigkeit. Bei annähernd konstantem O/V zeigten Probenmassen von 50 mg und 250 mg annähernd gleiche Werte für Tₘₐₓ.

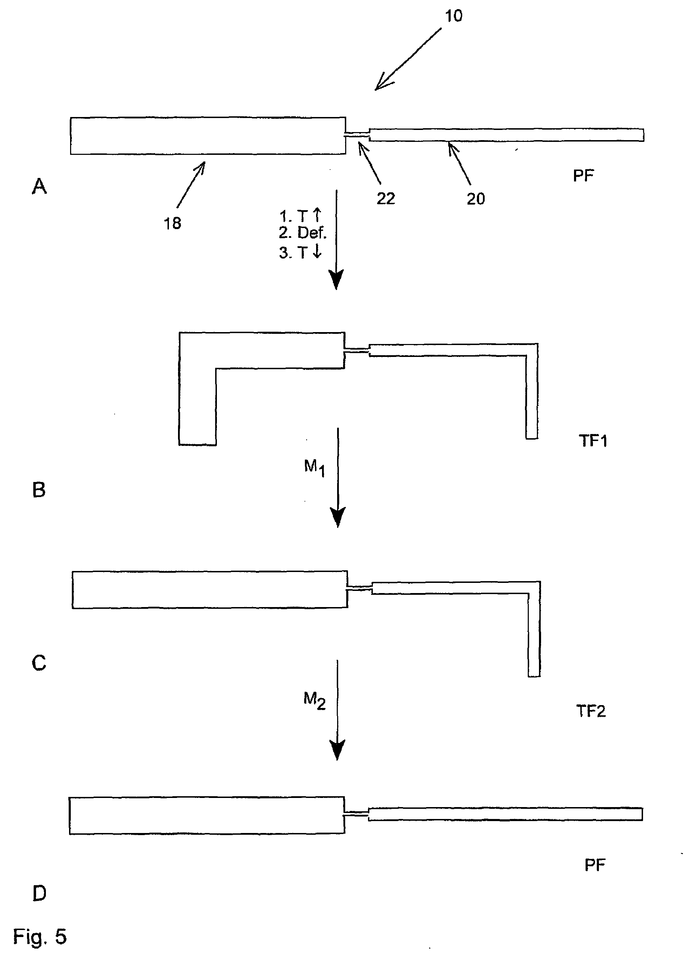

Ein Verfahren zur Herstellung eines programmierten Körpers ist anhand von Figur 5A und 5B am Beispiel des Artikels 10 aus Figur 2 dargestellt. Zunächst wird gemäß Figur 5A der Artikel 10 in seiner permanenten Form PF bereitgestellt. Handelt es sich bei dem verwendeten Formgedächtnispolymer 14 um ein Polymernetzwerk, so wird die permanente Form PF bereits während der Polymerisation der Monomere oder Makromonomere gebildet, wobei die permanente Form PF durch die erzeugten Vernetzungspunkte fixiert wird. Im Falle von Thermoplasten, die vor ihrer Formgebung bereits polymerisiert werden, wird die permanente Form PF durch Erstarren der Polymerschmelze in geeigneten Formwerkzeugen dargestellt, beispielsweise im Spritzgussverfahren. In beiden Fällen kann die permanente Form noch nachträglich durch mechanische (materialabtragende) oder thermo-mechanische Bearbeitung verändert werden.

Die anschließende Programmierung des Artikels 10 kann, wie in Figur 5 A und B dargestellt, beispielsweise dadurch erfolgen, dass der Artikel 10 zunächst auf eine Temperatur oberhalb der Schalttemperatur erwärmt wird und bei dieser Temperatur deformiert wird. Anschließend erfolgt eine Abkühlung unterhalb der Schalttemperatur, wobei ein Formzwang auf den Artikel 10 ausgeübt wird. Somit wird die erste temporäre Form TF1 fixiert. Im dargestellten Beispiel erfolgt die Deformation der beiden Abschnitte 18, 20 gleichzeitig bei der angehobenen Temperatur. Alternativ hierzu können die beiden Abschnitte 18, 20 auch jeweils separat voneinander erhitzt, deformiert und anschließend fixiert werden. In diesem Fall erfolgt zunächst die Deformation des Abschnitts 20 mit dem größeren ON oberhalb der Schalttemperatur und nachfolgendem Abkühlen, wobei die zweite temporäre Form TF2 fixiert wird. Anschließend erfolgt die Deformation des Abschnitts 20 mit dem kleineren ON oberhalb der Schalttemperatur und nachfolgendem Abkühlen, wobei die erste temporäre Form TF1 erzeugt wird. Es ist bei der Programmierung darauf zu achten, dass die Programmierung eines Abschnitts nicht die Programmierung eines anderen Abschnitts aufhebt. Insbesondere sollte bei der Rückstellung in die permanente Form das ON eines Abschnitts des Artikels nicht das ON eines anderen Abschnitts durchschreiten.

Alternativ zu der dargestellten thermo-mechanischen Programmierung, kann die Programmierung auch durch kaltes Verstrecken oder bei Materialien, deren Schalten auf einen Glasübergang beruht, durch ein temporäres Einbringen von Weichmachern derart erfolgen, so dass die Schalttemperatur unter die Umgebungstemperatur sinkt. Es können auch verschiedene Programmierungsmethoden für die unterschiedlichen Abschnitte 18, 20 verwendet werden.

Das Abrufen der gespeicherten Formen eines programmierten Artikels ist anhand von Figur 5 B bis D dargestellt. Ausgehend von der ersten temporären Form TF1, bei welcher beide Teilabschnitte 18 und 20 in ihrer deformierten Form fixiert vorliegen (Figur 5B), wird der Artikel 10 einem ersten Magnetfeld M₁ ausgesetzt, dessen Magnetfeldstärke und/oder -frequenz geeignet ist, den Abschnitt 18 mit dem kleineren ON auf eine Temperatur oberhalb der Schalttemperatur des Formgedächtnispolymers zu erwärmen. Dabei kommt es zu der Formrückstellung des Abschnitts 18 in seine ursprüngliche Form, wobei der Artikel 10 von seiner ersten temporären Form TF1 in seine zweite temporäre Form TF2 überführt wird (Figur 5C). Solange der Artikel 10 keinem stärkeren Magnetfeld ausgesetzt wird oder einer Umgebungstemperatur oberhalb der Schalttemperatur, bleibt die zweite temporäre Form TF2 stabil. Um auch die permanente Form PF wieder herzustellen, wird der in seiner zweiten temporären Form TF2 vorliegende Artikel 10 einem zweiten Magnetfeld M₂ ausgesetzt, dessen Feldstärke und/oder -frequenz ausreicht, auch den Abschnitt 20 mit dem größeren ON auf oder oberhalb der Schalttemperatur zu erwärmen. Dabei kommt es zur Rückstellung des Abschnitts 20 auf seine ursprüngliche Form, wobei der Artikel 10 von seiner zweiten temporären Form TF2 zur permanenten Form PF übergeht (Figur 5D). Zwar kommt es in diesem Schritt auch zu einer entsprechenden Erwärmung des Abschnitts 18, da dieser jedoch bereits in seiner permanenten Form vorliegt, kommt es hier nicht zu einer Formveränderung. Daher muss die Gesamtgeometrie des Artikels 10 so gewählt werden, dass auch bei der Schaltung der letzten Formänderung, das heißt des Abschnitts mit dem größten ON die erhöhten Temperaturen in den zuerst geschalteten Abschnitten mit den kleineren ON unschädlich für die Anwendung sind und die notwendige Stabilität des gesamten Bauteils erhalten bleibt.

### Magnetisch-induzierbarer multi-shape-Effekt eines Komposits aus einem PCL-Polymernetzwerk und magnetischen Nanopartikeln

Es wurde ein Kompositmaterial aus thermisch-vernetztem PCL-Dimethacrylat (10 kD) und 5 Gew.-% Nanopartikeln (AdNano^{®} MagSilica 50, Degussa Advanced Nanomaterials) hergestellt. Aus diesem Material wurde ein Probenkörper durch Gießen in einer Teflon-Form als ebener Körper (permanente Form) hergestellt. Der Probenkörper entsprach im Wesentlichen dem in Figur 2 dargestellten und umfasste zwei Quader (Abschnitte 18, 20) unterschiedlicher Geometrie, wobei der erste Abschnitt 18 ein ON von 0,8 m⁻¹ und der zweite ein ON von 2,8 m⁻¹ aufwies. Beide Abschnitte 18, 20 waren über einen, als isolierender Abschnitt 22 fungierenden 1 mm hohen Steg miteinander verbunden. Durch rechtwinkliges Abknicken der Probenenden bei 80 °C und anschließendes Abkühlen erfolgte die Programmierung der ersten temporären Form TF1 entsprechend der Darstellung in Figur 5B. Anschließend erfolgte die Rückstellung in einem Magnetfeld bei einer Feldstärke von 14 kA/m und 254 kHz an Luft bei einer Umgebungstemperatur von 25 °C. Dabei erfolgte zunächst die Rückstellung des Abschnitts 18 mit dem kleineren ON von 0,8 m⁻¹ (entsprechend Figur 5C). Die Rückstellung von TF1 nach TF2 erforderte das Erreichen der Schalttemperatur im quadratischen Abschnitt 18 und dauerte einige Minuten. Der andere Abschnitt 20 blieb dabei unverändert. Anschließend wurde die magnetische Feldstärke auf 19,3 kA/m erhöht, wobei auch die Rückstellung des Abschnitts 20 mit dem größeren ON erfolgte. Dabei wurde wieder ein ebener Körper entsprechend der permanenten Form PF (Figur 5D) erhalten.

### Quantifizierung des Einflusses des O/V auf die Rückstellung im Magnetfeld

Zur Untersuchung der Abhängigkeit des magnetisch-induzierten Formgedächtniseffektes von der Geometrie, insbesondere von dem Oberflächen-Volumen-Verhältnis, wurden die Abschnitte eines so hergestellten Probenkörpers bei einer Umgebungstemperatur von 80 °C beidseitig auf einen Winkel von 90° deformiert und durch Abkühlen auf 25 °C fixiert (programmiert). Der somit in seiner temporären Form vorliegende Probenkörper wurde in eine Hochfrequenz-Magnetfeldspule gebracht. Die Magnetfeldstärke wurde dann jeweils nach 40 Sekunden um 0,2 kA/m erhöht. Die Rückstellung wurde auf ein Videoband aufgezeichnet. Am Bildschirm erfolgte dann die Auswertung des Rückstellwinkels gegen die Zeit. In Figur 6 sind die Rückstellwinkel für die Abschnitte eines Probenkörpers mit unterschiedlichem ON gegen die Magnetfeldstärke aufgetragen. Es ist deutlich zu sehen, dass der Abschnitt mit dem geringeren ON (quadratische Symbole) sich bereits zurückgestellt hat, während der Abschnitt mit dem größeren ON (kreisförmige Symbole) noch die temporäre Form aufweist. Erst bei weiterer Erhöhung der Magnetfeldstärke geht auch dieser Abschnitt in seine Ursprungsform zurück.

### Quantifizierung des Einflusses des O/V auf die Rückstellung im Magnetfeld am Beispiel eines PPDL-PCL-Formkörpers

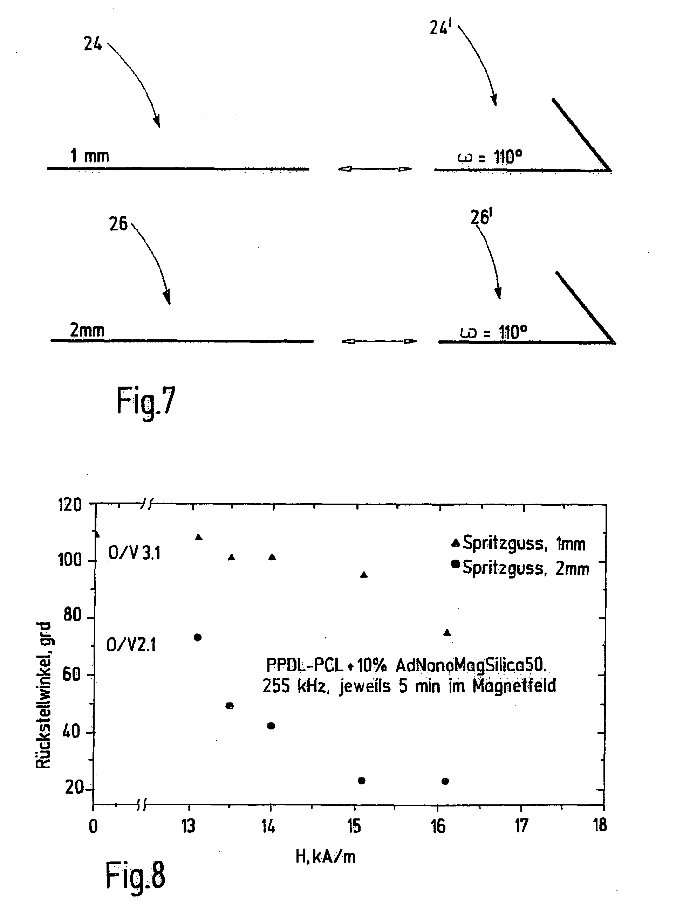

Zur Untersuchung der Abhängigkeit des magnetisch-induzierten Formgedächtniseffektes von der Geometrie, insbesondere von dem Oberflächen-Volumen-Verhältnis, wurden Probenkörper hergestellt, die aus einem Kompositmaterial aus einem Copolymer aus Polypentadecalacton (PPDL) und Poly-(ε-caprolacton) (PCL) sowie 10 Gew.-% Nanopartikeln (AdNano^{®} MagSilica 50, Degussa Advanced Nanomaterials, AdNano^{®} MagSilica 50, Degussa Advanced Nanomaterials, aus 50 bis 60 Gew.-% Eisen(III)oxid in einer SiO₂-Matrix) hergestellt. Die Normprobenkörper (IBB nach EN ISO 527-2) wurden im Spritzgussverfahren hergestellt, und wiesen eine Materialstärke von 1 mm bzw. 2 mm und damit ein ON von 3,1 bzw. 2,1 auf. Die entsprechenden Probenkörper 24 und 26 sind in Figur 7, linke Seite in ihrer permanenten Form dargestellt. Bei einer Umgebungstemperatur von 60 °C wurden die Körper auf einen spitzen Winkel von ca. 110° deformiert und durch Abkühlen fixiert (programmiert). Die somit in ihrer temporären Form vorliegenden Probenkörper 24' und 26' sind in Figur 7 auf der rechten Seite abgebildet. In einem Hochfrequenz-Magnetfeld wurde anschließend der Formgedächtniseffekt an den beiden programmierten Proben 24' und 26' ausgelöst, wobei die Proben an einem Probenhalter im Induktorzentrum des Magnetfelds fixiert vorlagen. Nach jeweils 5-minütiger Magnetfeldeinwirkung wurde der Rückstellwinkel gemessen. Eine vollständige Rückstellung entsprach dabei einem Rückstellwinkel von 0°. Die magnetische Feldstärke wurde dabei schrittweise erhöht und jeweils die Rückstellung ermittelt. Die Ergebnisse sind in Figur 8 gezeigt. Dabei zeigte sich, dass die Rückstellung bei größerem ON (Probenkörper 24, 1 mm) bei geringen Magnetfeldstärken fast gar nicht und bei den höheren Magnetfeldstärken nur sehr gering ausgeprägt ist. Dies bedeutet, dass die zur Rückstellung notwendige Materialtemperatur auch bei der höchsten untersuchten Magnetfeldstärke für den Probenkörper 24 mit großem ON nicht erreicht wurde. Bei dem kleineren O/V hingegen (Probenkörper 26, 2 mm) wurde ab einer Magnetfeldstärke von etwa 15 kA/m eine Rückstellung bis auf einen Winkel von etwa 20° erreicht. Eine zum Vergleich durchgeführte thermisch-induzierte Rückstellung bei 60 °C zeigte ebenfalls keine vollständige Rückstellung.

### BEZUGSZEICHEN/ABKÜRZUNGEN

- 10: Artikel
- 12: Formgedächtnis-Kompositmaterial
- 14: Formgedächtnispolymer
- 16: magnetisches Material
- 18: erster Abschnitt
- 20: zweiter Abschnitt
- 22: isolierender Abschnitt
- 24: Probenkörper permanente Form
- 24': Probenkörper temporäre Form
- 26: Probenkörper permanente Form
- 26': Probenkörper temporäre Form

- PF: permanente Form
- TF1: erste temporäre Form
- TF2: zweite temporäre Form
- ON: Oberflächen-Volumen-Verhältnis

## Patentansprüche

1. Artikel (10) aus einem Formgedächtnis-Kompositmaterial (12), welches ein Formgedächtnispolymer (14) sowie ein in dieses eingebettetes magnetisches Material (16) umfasst, wobei das Formgedächtnispolymer (14) nach einer thermo-mechanischen Programmierung in der Lage ist, temperaturinduziert zumindest einen Formenübergang von einer temporären Form in eine permanente Form zu vollziehen,
**dadurch gekennzeichnet, dass**
der Artikel (10) zumindest zwei, unmittelbar oder mittelbar miteinander verbundene Abschnitte (18, 20) aufweist, die sich durch ihre Oberflächen-Volumen-Verhältnisse (ON) unterscheiden, wobei die Oberflächen-Volumen-Verhältnisse (ON) der zumindest zwei Abschnitte (18, 20) so gewählt sind, dass die Abschnitte (18, 20) eine Differenz einer in einem gegebenen Magnetfeld maximal erreichbaren Materialtemperatur (Tₘₐₓ) von mindestens 10 K aufweisen.

2. Artikel (10) nach Anspruch 1,
**dadurch gekennzeichnet, dass**
ein Übergang zwischen den Oberflächen-Volumen-Verhältnissen (ON) der zumindest zwei Abschnitte (18, 20) an ihrer Grenzfläche sprunghaft oder in Bezug zu einer Gesamtausdehnung des Artikels (10) steil verläuft.

3. Artikel (10) nach einem der Ansprüche 1 oder 2,
**dadurch gekennzeichnet, dass**
die zumindest zwei Abschnitte (18, 20) jeweils eine, in zumindest eine Raumrichtung konstante Materialstärke aufweisen und/oder jeweils ein in zumindest eine Raumrichtung, insbesondere über eine Längserstreckung der Abschnitte (18, 20), konstantes Oberflächen-Volumen-Verhältnis (ON) aufweisen.

4. Artikel (10) nach einem der vorhergehenden Ansprüche,
**dadurch gekennzeichnet, dass**
die Oberflächen-Volumen-Verhältnisse (ON) der zumindest zwei Abschnitte (18, 20) sich durch einen Faktor von mindestens 1,2, insbesondere von mindestens 1,5, vorzugsweise von mindestens 2,0, unterscheiden.

5. Artikel (10) nach einem der vorhergehenden Ansprüche,
**dadurch gekennzeichnet, dass**
die Oberflächen-Volumen-Verhältnisse (ON) der zumindest zwei Abschnitte (18, 20) so gewählt sind, dass die Abschnitte (18, 20) eine Differenz einer in einem gegebenen Magnetfeld maximal erreichbaren Materialtemperatur (Tₘₐₓ) von mindestens 15 K, vorzugsweise von mindestens 20 K, aufweisen.

6. Artikel (10) nach einem der vorhergehenden Ansprüche,
**dadurch gekennzeichnet, dass**
die zumindest zwei Abschnitte (18, 20) durch einen thermisch isolierenden Abschnitt (22) miteinander verbunden sind, insbesondere durch einen Abschnitt, dessen Oberflächen-Volumen-Verhältnis (ON) mindestens desjenigen Abschnitts (18, 20) mit dem größeren Oberflächen-Volumen-Verhältnis (ON) entspricht.

7. Artikel (10) nach einem der vorhergehenden Ansprüche,
**dadurch gekennzeichnet, dass**
das magnetische Material (16) in Form von Partikeln vorliegt, insbesondere in Form von Mikropartikeln mit einem mittleren Partikeldurchmesser im Bereich von 1 bis 999 µm oder in Form von Nanopartikeln mit einem mittleren Partikeldurchmesser im Bereich von 1 bis 999 nm.

8. Artikel (10) nach einem der vorhergehenden Ansprüche,
**dadurch gekennzeichnet, dass**
das magnetische Material (16) zumindest eine Komponente ist, ausgewählt aus der Gruppe umfassend Metalle, insbesondere Ni, Fe und Co; Legierungen, insbesondere Ni-Si, Fe-Pt, Ni-Pd und Co-Pd; Metalloxide, insbesondere Ni-Zn-Fe-O, Ba-Co-Fe-O und Fe-O; Magnetite oder Eisenoxide, in denen die Eisenatome teilweise durch Co, Ni, Mn, Zn, Mg, Cu, Cr, Cd und/oder Ga ersetzt sind; Ferrite, insbesondere Ni-Zn- und Sr-Ferrite.

9. Artikel (10) nach einem der vorhergehenden Ansprüche,
**dadurch gekennzeichnet, dass**
das die Partikel des magnetischen Materials (16) eine Beschichtung eines die Mischbarkeit mit der Formgedächtnispolymer (14) verbessernden Materials aufweisen.

10. Artikel (10) nach einem der vorhergehenden Ansprüche,
**dadurch gekennzeichnet, dass**
das Formgedächtnispolymer (14) ein physikalisch oder kovalent vernetztes Polymernetzwerk umfasst, das zumindest ein Schaltsegment aufweist, das ausgewählt ist aus der Gruppe der Polyester, insbesondere Poly(ε-caprolacton); Polyether, Polyurethane, Polyetherurethane, Polyamide, Polyimide, Polyetherimide, Polyacrylate, Polymethacrylate, Polyvinyle, Polystyrole, Polyoxymethylene, Poly(para-dioxanon).

11. Artikel (10) nach einem der vorhergehenden Ansprüche,
**dadurch gekennzeichnet, dass**
das Formgedächtnispolymer (14) hydrolytisch spaltbare Gruppen, insbesondere Ester-, Amid-, Anhydrid-, Carbonat-, Ether- und/oder Orthoestergruppen, enthält.

12. Artikel (10) nach einem der vorhergehenden Ansprüche,
**dadurch gekennzeichnet, dass**
die magnetische Substanz (16) in homogener Verteilung in dem Formgedächtnispolymer (14) vorliegt.

13. Verfahren zur Herstellung eines programmierten Artikels (10) mit den Schritten
(a) Bereitstellen eines Artikels (10) nach einem der Ansprüche 1 bis 12 in einer permanenten Form,
(b) Deformation eines ersten Abschnitts (18) des Artikels (10) bei einer Materialtemperatur oberhalb der Schalttemperatur des Formgedächtnis-Kompositmaterials (12) und anschließende Abkühlung unterhalb der Schalttemperatur und
(c) Deformation eines zweiten Abschnitts (20) des Artikels (10) bei einer Materialtemperatur oberhalb der Schalttemperatur des Formgedächtnis-Kompositmaterials (12) und anschließende Abkühlung unterhalb der Schalttemperatur,
wobei die Schritte (b) und (c) in beliebiger Reihenfolge oder gleichzeitig durchführbar sind.

14. Verfahren zum Abrufen von gespeicherten Formen eines programmierten Artikels (10) nach einem der Ansprüche 1 bis 12 mit den Schritten
(a) Aussetzung des Artikels (10) einem ersten magnetischen Wechselfeld, das geeignet ist, einen ersten Abschnitt (18) des Artikels (10) mit einem ersten Oberflächen-Volumen-Verhältnis (O/V₁) auf oberhalb der Schalttemperatur des Formgedächtnis-Kompositmaterials (12) zu erwärmen, wobei der erste Abschnitt (18) einen Formenübergang vollzieht und der Artikel (10) von einer ersten temporären Form (TF1) in eine zweite temporäre Form (TF2) übergeht, und
(b) Aussetzung des Artikels (10) einem zweiten magnetischen Wechselfeld, das geeignet ist, einen zweiten Abschnitt (20) des Artikels (10) mit einem zweiten Oberflächen-Volumen-Verhältnis (O/V₂), das größer als das erste Oberflächen-Volumen-Verhältnis (O/V₁) des ersten Abschnitts (18) ist, auf oberhalb der Schalttemperatur des Formgedächtnis-Kompositmaterials (12) zu erwärmen, wobei der Abschnitt (20) einen Formenübergang vollzieht und der Artikel (10) von der zweiten temporären Form (TF2) in die permanente Form (PF) übergeht.

15. Verfahren nach Anspruch 14,
**dadurch gekennzeichnet, dass**
der Übergang von dem ersten magnetischen Wechselfeld zu dem zweiten magnetischen Wechselfeld durch schrittweise oder kontinuierliche Erhöhung der Magnetfeldstärke und/oder -frequenz erfolgt.

## Claims

1. An article (10) made of a shape memory composite material (12) comprising a shape memory polymer (14) and a magnetic material (16) embedded therein, said shape memory polymer (14) after thermomechanical programming being capable of undergoing at least one temperature-induced shape transition from a temporary shape into a permanent shape, **characterized in that** the article (10) has at least two directly or indirectly interconnected sections (18, 20) differing from each other in their surface/volume ratios (S/V), the surface/volume ratios (S/V) of the at least two sections (18, 20) being selected in such a way that the sections (18, 20) exhibit a difference in a maximum material temperature (Tₘₐₓ) achievable in a given magnetic field of at least 10 K.

2. The article (10) according to claim 1, **characterized in that** a transition between the surface/volume ratios (S/V) of the at least two sections (18, 20) at their boundary surface is abrupt or, in relation to an overall expanse of the article (10), steep.

3. The article (10) according to either of claims 1 and 2, **characterized in that** each of the at least two sections (18, 20) has a constant material thickness in at least one direction in space and/or a constant surface/volume ratio (S/V) in at least one direction in space, particularly along a longitudinal extent of the sections (18, 20).

4. The article (10) according to any preceding claim, **characterized in that** the surface/volume ratios (S/V) of the at least two sections (18, 20) differ by a factor of at least 1.2, especially at least 1.5, and preferably at least 2.0.

5. The article (10) according to any preceding claim, **characterized in that** the surface/volume ratios (S/V) of the at least two sections (18, 20) are selected in such a way that the sections (18,20) exhibit a difference in a maximum material temperature (Tₘₐₓ) achievable in a given magnetic field of at least 15 K, and preferably at least 20 K.

6. The article (10) according to any preceding claim, **characterized in that** the at least two sections (18, 20) are connected to each other via a thermally insulating section (22), particularly a section whose surface/volume ratio (S/V) corresponds to at least that of the section (18, 20) having the higher surface/volume ratio (S/V).

7. The article (10) according to any preceding claim, **characterized in that** the magnetic material (16) is in the form of particles, especially in the form of microparticles having a mean particle diameter in the range of from 1 to 999 µm or in the form of nanoparticles with a mean particle diameter in the range of from 1 to 999 nm.

8. The article (10) according to any preceding claim, **characterized in that** the magnetic material (16) is at least one component selected from the group comprising metals, especially Ni, Fe and Co; alloys, particularly Ni-Si, Fe-Pt, Ni-Pd and Co-Pd; metal oxides, particularly Ni-Zn-Fe-O, Ba-Co-Fe-O and Fe-O; magnetites or iron oxides wherein the iron atoms are partially replaced with Co, Ni, Mn, Zn, Mg, Cu, Cr, Cd and/or Ga; ferrites, particularly Ni-Zn and Sr ferrites.

9. The article (10) according to any preceding claim, **characterized in that** the particles of the magnetic material (16) have a coating of material that improves the miscibility with the shape memory polymer (14).

10. The article (10) according to any preceding claim, **characterized in that** the shape memory polymer (14) comprises a physically or covalently crosslinked polymer network which has at least one switching segment selected from the group of polyesters, particularly poly(ε-caprolactone); polyethers, polyurethanes, polyether urethanes, polyamides, polyimides, polyether imides, polyacrylates, polymethacrylates, polyvinyls, polystyrenes, polyoxymethylenes, poly(para-dioxanone).

11. The article (10) according to any preceding claim, **characterized in that** the shape memory polymer (14) contains hydrolytically cleavable groups, particularly ester, amide, anhydride, carbonate, ether, and/or orthoester groups.

12. The article (10) according to any preceding claim, **characterized in that** the magnetic substance (16) is homogeneously distributed in the shape memory polymer (14).

13. A method for producing a programmed article (10), said method including the steps of:
a) providing an article (10) according to any one of claims 1 to 12 in a permanent shape;
b) deforming a first section (18) of the article (10) at a material temperature above the switching temperature of the shape memory composite material (12) and subsequently cooling below the switching temperature; and
c) deforming a second section (20) of the article (10) at a material temperature above the switching temperature of the shape memory composite material (12) and subsequently cooling below the switching temperature;
wherein the steps b) and c) can be performed in any order or simultaneously.

14. A method for retrieving stored shapes of a programmed article (10) according to any one of claims 1 to 12, said method including the steps of:
(a) exposing the article (10) to a first alternating magnetic field which is suitable to heat a first section (18) of the article (10) with a first surface/volume ratio (S/V₁) above the switching temperature of the shape memory composite material (12), said first section (18) undergoing a shape transition and said article (10) being transformed from a first temporary shape (TS1) into a second temporary shape (TS2); and
(b) exposing the article (10) to a second alternating magnetic field which is suitable to heat a second section (20) of the article (10) with a second surface/volume ratio (S/V₂) greater than the first surface/volume ratio (S/V₁) of the first section (18) above the switching temperature of the shape memory composite material (12), said section (20) undergoing a shape transition and said article (10) being transformed from the second temporary shape (TS2) into the permanent shape (PS).

15. The method according to claim 14, **characterized in that** the transition from the first alternating magnetic field to the second alternating magnetic field is effected by a step-by-step or continuous increase of the magnetic field strength and/or frequency.

## Revendications

1. Article (10) constitué d'un matériau composite à mémoire de forme (12), qui comprend un polymère à mémoire de forme (14) et un matériau magnétique (16) incorporé dans celui-ci, le polymère à mémoire de forme (14) étant capable, après une programmation thermomécanique, de réaliser au moins une transition de forme induite par la température d'une forme temporaire vers une forme permanente,
**caractérisé en ce que**
l'article (10) comprend au moins deux sections (18, 20) directement ou indirectement reliées les unes avec les autres, qui diffèrent par leurs rapports surface-volume (S/V), les rapports surface-volume (S/V) des deux sections ou plus (18, 20) étant choisis de manière à ce que les sections (18, 20) présentent une différence d'une température de matériau maximale atteignable dans un champ magnétique donné (Tₘₐₓ) d'au moins 10 K.

2. Article (10) selon la revendication 1, **caractérisé en ce qu'**une transition entre les rapports surface-volume (S/V) des deux sections ou plus (18, 20) se déroule de manière brusque à leur interface ou de manière abrupte par rapport à une étendue globale de l'article (10).

3. Article (10) selon la revendication 1 ou 2, **caractérisé en ce que** les deux sections ou plus (18, 20) présentent chacune une épaisseur de matériau constante dans au moins une direction de l'espace et/ou présentent chacune un rapport surface-volume (S/V) constant dans au moins une direction de l'espace, notamment sur une étendue longitudinale des sections (18, 20).

4. Article (10) selon l'une quelconque des revendications précédentes, **caractérisé en ce que** les rapports surface-volume (S/V) des deux sections ou plus (18, 20) diffèrent par un facteur d'au moins 1,2, notamment d'au moins 1,5, de préférence d'au moins 2,0.

5. Article (10) selon l'une quelconque des revendications précédentes, **caractérisé en ce que** les rapports surface-volume (S/V) des deux sections ou plus (18, 20) sont choisis de manière à ce que les sections (18, 20) présentent une différence d'une température de matériau maximale atteignable dans un champ magnétique donné (Tₘₐₓ) d'au moins 15 K, de préférence d'au moins 20 K.

6. Article (10) selon l'une quelconque des revendications précédentes, **caractérisé en ce que** les deux sections ou plus (18, 20) sont reliées les unes aux autres par une section thermiquement isolante (22), notamment par une section dont le rapport surface-volume (S/V) correspond au moins à celui de la section (18, 20) ayant le plus grand rapport surface-volume (S/V).

7. Article (10) selon l'une quelconque des revendications précédentes, **caractérisé en ce que** le matériau magnétique (16) se présente sous la forme de particules, notamment sous la forme de microparticules ayant un diamètre de particule moyen dans la plage allant de 1 à 999 µm ou sous la forme de nanoparticules ayant un diamètre de particule moyen dans la plage allant de 1 à 999 nm.

8. Article (10) selon l'une quelconque des revendications précédentes, **caractérisé en ce que** le matériau magnétique (16) est au moins un composant choisi dans le groupe comprenant les métaux, notamment Ni, Fe et Co ; les alliages, notamment Ni-Si, Fe-Pt, Ni-Pd et Co-Pd ; les oxydes de métaux, notamment Ni-Zn-Fe-O, Ba-Co-Fe-O et Fe-O ; les magnétites ou les oxydes de fer dans lesquels les atomes de fer sont remplacés partiellement par Co, Ni, Mn, Zn, Mg, Cu, Cr, Cd et/ou Ga ; les ferrites, notamment les ferrites Ni-Zn et Sr.

9. Article (10) selon l'une quelconque des revendications précédentes, **caractérisé en ce que** les particules du matériau magnétique (16) comportent un revêtement d'un matériau qui améliore la miscibilité avec le polymère à mémoire de forme (14).

10. Article (10) selon l'une quelconque des revendications précédentes, **caractérisé en ce que** le polymère à mémoire de forme (14) comprend un réseau polymère réticulé de manière physique ou covalente, qui comprend au moins un segment de commutation, qui est choisi dans le groupe constitué par les polyesters, notamment la poly(ε-caprolactone) ; les polyéthers, les polyuréthanes, les polyéther-uréthanes, les polyamides, les polyimides, les polyéther-imides, les polyacrylates, les polyméthacrylates, les polyvinyles, les polystyrènes, les polyoxyméthylènes, la poly(paradioxanone).

11. Article (10) selon l'une quelconque des revendications précédentes, **caractérisé en ce que** le polymère à mémoire de forme (14) contient des groupes clivables par hydrolyse, notamment des groupes ester, amide, anhydride, carbonate, éther et/ou orthoester.

12. Article (10) selon l'une quelconque des revendications précédentes, **caractérisé en ce que** la substance magnétique (16) se présente en distribution homogène dans le polymère à mémoire de forme (14).

13. Procédé de fabrication d'un article programmé (10) comprenant les étapes suivantes :
(a) la préparation d'un article (10) selon l'une quelconque des revendications 1 à 12 sous une forme permanente,
(b) la déformation d'une première section (18) de l'article (10) à une température de matériau supérieure à la température de commutation du matériau composite à mémoire de forme (12), puis le refroidissement en dessous de la température de commutation, et
(c) la déformation d'une seconde section (20) de l'article (10) à une température de matériau supérieure à la température de commutation du matériau composite à mémoire de forme (12), puis le refroidissement en dessous de la température de commutation,
les étapes (b) et (c) étant réalisables selon un ordre quelconque ou simultanément.

14. Procédé de rappel de formes conservées en mémoire d'un article programmé (10) selon l'une quelconque des revendications 1 à 12, comprenant les étapes suivantes :
(a) l'exposition de l'article (10) à un premier champ magnétique alternatif qui est approprié pour porter une première section (18) de l'article (10) ayant un premier rapport surface-volume (S/V₁) à une température supérieure à la température de commutation du matériau composite à mémoire de forme (12), la première section (18) réalisant une transition de forme et l'article (10) passant d'une première forme temporaire (TF1) à une seconde forme temporaire (TF2), et
(b) l'exposition de l'article (10) à un second champ magnétique alternatif qui est approprié pour porter une seconde section (20) de l'article (10) ayant un second rapport surface-volume (S/V₂), qui est supérieur au premier rapport surface-volume (S/V₁) de la première section (18), à une température supérieure à la température de commutation du matériau composite à mémoire de forme (12), la section (20) réalisant une transition de forme et l'article (10) passant de la seconde forme temporaire (TF2) à la forme permanente (PF).

15. Procédé selon la revendication 14, **caractérisé en ce que** la transition du premier champ magnétique alternatif au second champ magnétique alternatif a lieu par une élévation graduelle ou continue de la puissance et/ou de la fréquence du champ magnétique.
